Europäisches Patentamt

European Patent Office

Office européen des brevets

(11) Publication number: **0 197 381**
**B1**

(12) **EUROPEAN PATENT SPECIFICATION**

(45) Date of publication of patent specification: **24.05.89**

(21) Application number: **86103735.6**

(22) Date of filing: **19.03.86**

(51) Int. Cl.⁴: **B 66 F 3/35,** B 29 D 22/00

(54) Pneumatic lift jack.

(30) Priority: **22.03.85 US 714766**
**29.08.85 US 770460**

(43) Date of publication of application:
**15.10.86 Bulletin 86/42**

(45) Publication of the grant of the patent:
**24.05.89 Bulletin 89/21**

(84) Designated Contracting States:
**DE FR GB**

(56) References cited:
**AU-B- 453 143**
**DE-A-2 405 788**
**FR-A- 998 972**
**FR-A-2 125 216**
**FR-A-2 499 462**
**GB-A-1 169 023**
**US-A-2 610 824**
**US-A-3 015 470**
**US-A-3 822 861**
**US-A-4 143 854**

(73) Proprietor: **The B.F. Goodrich Company**
**500 South Main Street**
**Akron Ohio 44318 (US)**

(72) Inventor: **Orndorff, Roy Lee, Jr.**
**7827 Birchwood Drive**
**Kent Ohio 44240 (US)**

(74) Representative: **Selting, Günther, Dipl.-Ing. et al**
**Deichmannhaus am Hauptbahnhof**
**D-5000 Köln 1 (DE)**

Courier Press, Leamington Spa, England.

## Description

### Background of the Invention

This invention relates to lifting devices such as jacks and particularly to fluid pressure or pneumatic type jacks having utility in lifting cars for changing flat tires, and to the method of making such jacks.

The difficulties, dangers and general inconveniences which are characteristic of mechanical lifting devices such as jacks are commonly known. Mechanical jacks are normally multi-component structures which are expensive and which require assembly prior to use. Further, mechanical aptitude is often required during their use.

Once in use, the stability of such jacks is often unsatisfactory. The user is required to take precautionary measures against the car being lifted from, coming free of contact with, and support by, the jack. Furthermore, convenient and compact storage of these mechanical jacks is a problem as is their cost of manufacture.

Alleviation of certain of the aforementioned problems attendant with mechanical jacks has been made possible with fluid pressure or pneumatic type jacks.

One of the known forms of pneumatic jacks is the barrel-shaped structure or cylindrical bag stretcher which operates on the bellows type of principal. These pneumatic jacks offer advantages in that they are of an essentially one-piece construction, are easily and conveniently stored, and have good stability and are light weight when compared with most known mechanical jacks. One disadvantage of these jacks has been their high manufacturing cost, a factor believed to have precluded a wide market acceptance of such type of jack. A typical example of such jack is disclosed in U.S. Patent No. 3,565,398. Another disadvantage in using such devices is that it requires careful positioning of the jack beneath the car to be lifted in order to preclude inadvertent rolling of such jack and movement of the car during, or subsequent to the full inflation of the jack.

Another type of fluid pressure or pneumatic type jack is described in U.S. Patent No. 4,036,472 to Orndorff. This jack consists of a flat, rectangular, inflatable bag fabricated from two rectangular sheets stitched at their marginal portions. An inflation chamber is created between the sheets. Each of the two sheets includes layers of rubberized, mutually parallel, supporting cords extending at a pre-selected acute angle relative to the longitudinal center line of the sheets in which they are contained. Their cords are oriented with immediately adjacent layers being in opposite directions. Such type of jack, however, is still relatively expensive to fabricate.

It is the object of the invention to develop improved fluid pressure or pneumatic type jacks which would require a reduced manufacturing cost.

Such developmental efforts, however, have heretofore been incapable of achieving sufficiently significant advantages of inflatable jacks over mechanical jacks to create their broad market acceptance.

The present invention overcomes these difficulties by a pneumatic jack comprising flat sheets of a flexible material, which are fluid-tightly sealed together around their peripheral edges and valve means in communication with the interior of said sheets, characterized in that said two sheets consist of non-reinforced elastomer material and are encompassed around their peripheral edges by rigid framing means.

This construction makes the jack stable in use once inflated because of its unique anti-roll feature. A rigid peripheral rim wedges the pneumatic jack into a canted position which in effect prevents the further movement of the jack.

The method of making the pneumatic jack comprises the steps of encompassing a thin separator except for its marginal edges by elastomeric material to form a flat sheet, vulcanizing said flat sheet into a flat sheet with a flared peripheral edge, while disintegrating said separator to form a chamber coextensive with the position held by said separator, providing a valve means in said pneumatic jack that communicates with said chamber formed by said separator for pressurizing said chamber, and attaching a rim clamp to the periphery of sad pneumatic jack to provide a reinforcing edge to said jack. This method results in low manufacturing costs when compared to prior similarly constructed jacks.

In one form of the invention the peripheral rim has a non-metallic edge which enhances the anti-roll feature of the jack.

The present invention relates to the article and method of making a flat, inflatable, bag type jack comprised of upper and lower elastomer sheets. The sheets are joined together and are supported peripherally by rigid framing members located on opposite sides of the sheets.

The sheets are preferably formed of an elastomeric material which is wear resistant in character and also resistant to tear or breakage, particularly when inflated. As a result of such characteristics, the inflated sheets will not be susceptible to an explosive failure when punctured. Rather, such sheets would leak air slowly when punctured to preclude harm to a user or car being lifted. Also, the invention contemplates rigid peripheral framing members which will provide added support to the sheets during inflation. The orientation of such rigid members which also includes an elastomeric ridge or edge bead will, during and throughout inflation, provide an anti-rolling characteristic to the jack and car since the rigid framing members will effectively wedge between the ground and vehicle minimizing the amount of movement the vehicle will undergo when being lifted for further safety to the car and the user of the jack. Lastly, the jack is provided with a valve either directly on the lifting device or through a tube at a remote location whereby the valve may be conveniently coupled to a bellows, compressor or other suitable source of fluid to effect inflation during use.

The combination of features employed in the pneumatic jack of the present invention and the method of making such jack results in the objectives of providing a safe, low cost, effective jack which is convenient to store and simple to use.

These and other objects and further advantages will become apparent upon a reading of the following detailed description of the invention when read in conjunction with the appended claims.

Brief Description of the Drawings

In the drawings which illustrate the invention in accordance with the presently preferred embodiment,

Fig. 1 is a perspective view of the pneumatic lift jack constructed in accordance with the present invention and shown in an uninflated condition.

Fig. 2 is a perspective view of the inflatable lift jack shown in Figure 1 but with the jack in the inflated condition.

Fig. 3 is an enlarged sectional view of the device, taken through sectional lines 3—3 of Figure 2 and illustrating the interconnection between the inflatable sheet members and the framing members.

Fig. 4 is a sectional view similar to Figure 3 but showing a corner of the jack where the inflation tube communicates with the interior inflatable chamber between the sheet members.

Fig. 5 is an enlarged perspective view similar to Figure 4 but showing an alternate embodiment thereof with the valve directly communicating with the inflatable chamber between the sheets and with the inflation tube eliminated.

Fig. 6 is an illustration of a car raised by inflation of the pneumatic jack so as to permit the changing of a flat tire and illustrating the wedging action effected by the rigid framing members of the jack.

Fig. 7 is a perspective view of an alternate embodiment of the pneumatic lift jack constructed in accordance with the present invention shown in an uninflated condition.

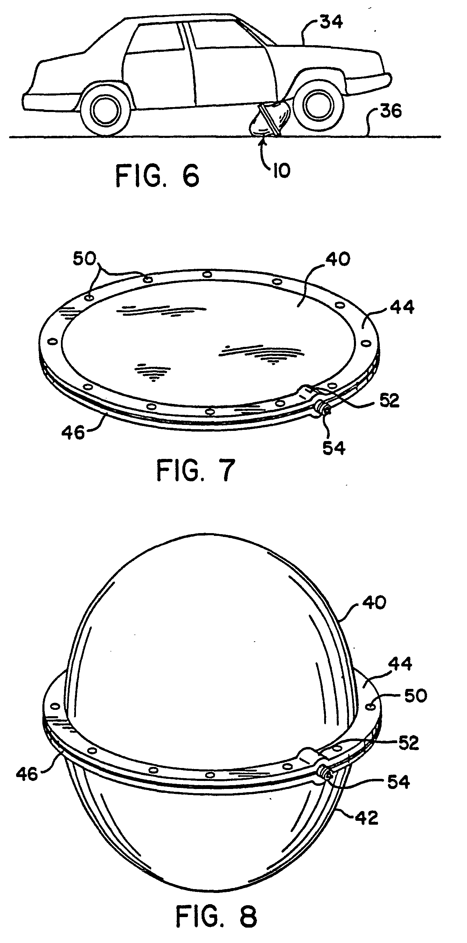

. Fig. 8 is an illustration of the alternate embodiment as shown in Fig. 7 shown in an inflated condition for lifting a car so as to permit the changing of a tire.

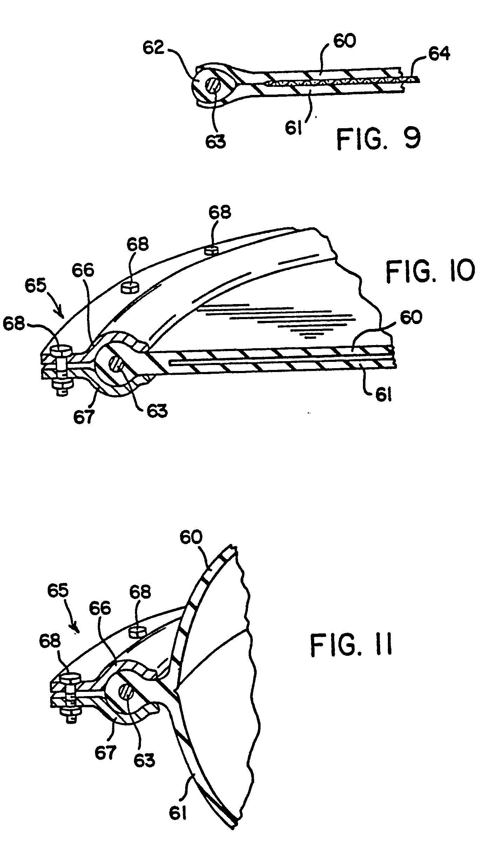

Fig. 9 is an enlarged fragmentary sectional view of a further modification of the pneumatic jack illustrating the interconnection between the upper and lower sheet members and the rim including the circumferential bead integral therewith prior to vulcanization.

Fig. 10 is a perspective view of the rim construction of the pneumatic jack illustrated in Fig. 9 after vulcanization and with a rim clamp.

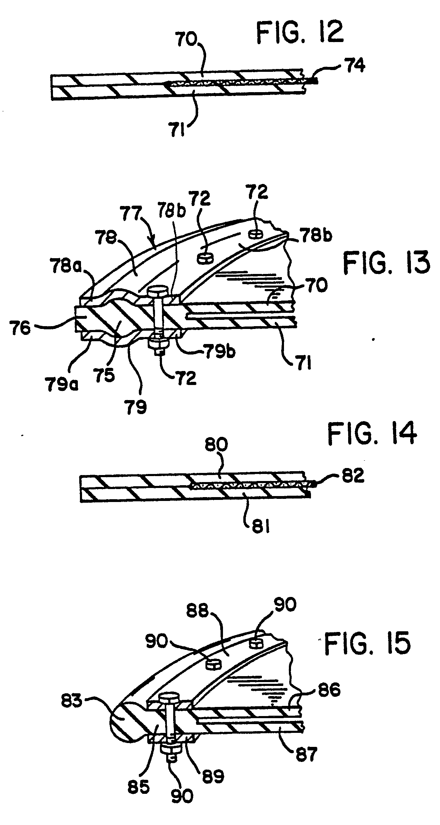

Fig. 11 is a fragmentary perspective view of the inflatable lift jack shown in Fig. 10 in the inflated condition.

Fig. 12 is an enlarged fragmentary sectional view of a further modification of the pneumatic lift jack prior to vulcanization.

Fig. 13 is a perspective view of the rim construction of the pneumatic jack shown in Fig. 12 after vulcanization and with a peripheral rim clamp.

Fig. 14 is a still further modification of a lift jack in cross section prior to vulcanization similar to Fig. 12.

Fig. 15 is a perspective view of the rim construction of the pneumatic jack shown in Fig. 14 after vulcanization and with a rim clamp.

Description of the Preferred Embodiment

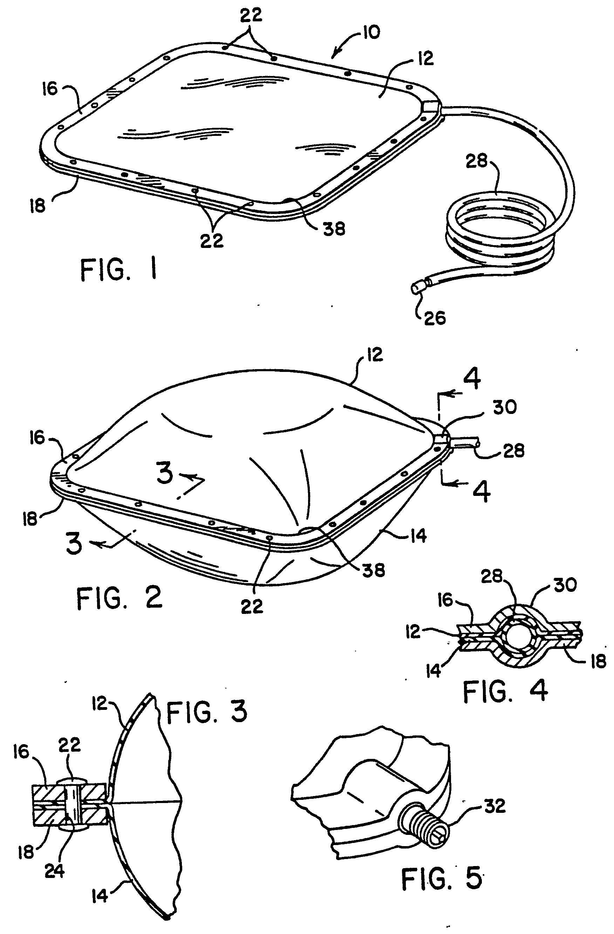

The inflatable pneumatic jack 10 according to the preferred embodiment of the instant invention is shown in a deflated condition in Figure 1. It is preferably formed of facing sheet members 12 and 14 in a rectangular, preferably square, shape. Surrounding the sheets on their periphery are rigid framing members 16 and 18 located on opposite sides of, above and below, the sheets. Rivets 22 are provided to extend through holes 24 in the framing members to hold the assembly in place. Bolts with nuts or other suitable coupling elements extending through holes in the sheets and framing members could be utilized as the equivalent of the rivets as shown.

The material for the sheets is an elastomeric material such as a nitrile compound with a shore A hardness value of about 60. It has a stress-strain curve that is essentially straight from 0% strain to the ultimate or failure strain value of about 500%. This type of material eliminates the possibility of the "balloon effect" which is the sudden local enlargement of an inflatable all-elastomeric device due to a great increase in strain without a corresponding increase in wall stress. The balloon effect would lead to early product failure. The nitrile elastomer has good oil and heat resistance.

Nitrile elastomers are characterized by a high resistance to tear under pressure and high wear characteristics. Such materials when punctured would tend to leak air slowly rather than rapidly pop in an explosive manner which, during use, could cause a rapid falling of the vehicle being lifted, possibly resulting in harm to the car or to the user. Natural rubber compounds are particularly susceptible to the ballooning effect which can result in explosive blow-out or decompression.

Additional additives may preferably be added to insure adequate ozone and oxygen resistance in accordance with known chemical practices in a manner well known in the art.

The two metal framing members shown for clamping the elastomeric sheets together serve several functions. They enable the elastomeric sheets to be made out of simple commercially available materials such as nitrile rubbers which can be riveted or bolted together to greatly simplify the manufacturing process as compared to a molded unit. The framing members restrain the elastomeric sheets to expansion in only one direction when the jack is inflated. They clamp in place the inlet valve or tube. They allow leakage if the unit is over-pressurized. The exterior dimension of the framing members is greater than the intended lifting height so that they may act as wedges to prevent the rolling movement of the jack and car during operation by jamming or wedging underneath the car and above the ground when the jack tries to tilt as illustrated in Figure 6.

In use, it is desirable to add an adhesive or sealer to the sheet material in the zone between the framing members. Such adhesive may assist in retaining the air tight relationship of the zone of inflation during inflation and use. Commonly known general purpose rubber adhesives may be utilized.

Inflation is achieved through a standard tire valve 26 mounted in one end of an inflation tube 28. The other end of the inflation tube is in pneumatic communication with the interior of the sheets preferably through one corner of the framing member as shown in Fig. 2. The framing members must be formed with a tube receiving deformation 30 in the corner of the frame members as shown in Fig. 4 with the deformation shaped and sized to receive the end of the tube in a conforming manner.

In the alternate embodiment of the inflating mechanisms as shown in Fig. 5, the inflation tube is eliminated and, rather, the standard tire valve 32 is mounted directly within the framing members at one corner for direct inflation of the jack through the source of compressed fluid. A tube coupled with, or separate from, the source of fluid is needed to achieve inflation.

In one initial successful model, square metal frames were made out of 0.125 inch (3,175 mm) thick aluminum with outside dimensions of 18 inches by 18 inches (45,72 cm × 45,72 cm) and inside dimensions of 16 inches by 16 inches (40,64 cm × 40,64 cm). The nitrile elastomer sheets were each 0.125 inches (3,175 mm) thick. The whole assembly was bolted together. The overall weight of the jack was 6.1 lbs (2,76 kg). Car clearance at a lift start was 9 inches (22,86 cm). Final lift height with the inflated tire one inch off the ground was 12.75 inches (32 cm). Inflation pressure was 12.5 psig (0,88 bar), which decayed to 11.7 psig (0,82 bar) during the first several minutes with no drop in tire to ground clearance. Negligible further pressure decay took place. Calculated inflation volume was 2 cubic feet (57 dm$^3$). The inflated tire wheel was off the ground for approximately 15 minutes before the jack was deflated, a time normally acceptable for changing of the tire. Measured sidewall elongation was 100% compared to the ultimate value of 515%. Deflated tensile set was 6%.

When the jack is inflated without load, the jack assumes an ovate shape rather than a spherical, enlarged shape. The shape was generally symmetric but the distance between the centers of the sheets was greater than the distance to the exterior edges of the frames of 18 inches (45,72 cm). When lifting a car, the inflated device achieved a squashed shape to form a rough cube in order to achieve the required contract area.

Inflation devices required for utilization of pneumatic jacks are becoming commercially available in cars. Consequently, pneumatic jacks are also potentially more acceptable. Cars are being constructed with their own source of compressed aeroform fluid such as under the hood as part of the engine. Also, separate bottles can be provided in trunks as a limited supply of compressed air for the jack and tires. Further, pressure sources, operable off the electric power of a cigarette lighter are also known and in use today. All these related inflation devices make pneumatic jacks more commercially acceptable.

Materials for the rigid frame members would include steel, aluminum, case aluminum, fiberglass reinforced plastic, or the like, so long as they had sufficient strength to resist the pressures applied thereto by the automobile and ground during use.

Testing of the new jack has revealed that stability or roll-off resistance is best when the jack is placed underneathh the car with its diagonal dimension in line with the longitudinal axis of the car. The outside dimensions of 18 inches by 18 inches (45,72 cm × 45,72 cm) gives a diagonal distance of 25.5 inches (64,77 cm). If a car starts to roll above the inflated jack, the diagonal, pointed outer corners of the framing material would dig in quickly to stop any movement of the car or jack.

Fig. 6 illustrates the jack wedged or jammed between a car 34 and the ground 36 to stop a roll of the jack and car. The transmission of the car was in neutral and the hand brake was off. The initial tire ground clearance of 1 inch had decreased to 0.5 inch (1,27 cm) when the roll was stopped. The inflated shape of the jack reduces the need for overly accurate placement of the jack under the car during its use.

Note is taken that framing members are provided with curves 38 at the corners of the rubber. Such curves tend to decrease the stress points of the rubber at these locations for insuring a smooth inflation of the sheets into an ovate or spherical type configuration during inflation and use, as illustrated in Figs. 2 and 6.

In an alternate embodiment of the invention as shown in Figs. 7 and 8, the sheeting material 40 and 42 is cut to a round configuration 18 inches (45,72 cm) in diameter. The metal frames 44 and 46 have inside diameters of 16 inches (40,64 cm) and outside diameters of 18 inches (45,72 cm). Rivets 50 extend through holes in the frames and rubber plates as in the primary embodiment and a deformation 52 in the framing members permits the mounting of a valve 54, or, as in the primary embodiment, a tube with a remote valve. Suitable rubber cement is employed to enhance the seating of the sheets adjacent their peripheries. During free inflation the sheets assume an ovate shape as in the primary embodiment.

A further modification of the invention is shown in Figs. 9, 10, and 11 wherein during the preparation of the inflatable jack two elastomeric sheeting materials 60 and 61 are cut into a round configuration similar to the embodiment of Fig. 7 (although the configuration of Fig. 1 is also contemplated) with the respective peripheral edges overlying an annular bead of rubber 62 that encircles a metallic bead 63. A suitable layer of paper or a plastic film 64 is laid between the two sheeting materials 60 and 61 such that the film 64 extends to within a short distance of the annular bead 62. Upon vulcanization of the inflatable jack, a mold is employed that retains the enlarged shape of the annular bead 62 compared to the flat sheeting of elastomeric materials 60 and 61 to provide a one-piece pneumatic jack structure as illustrated partially in cross section in Fig. 10. Such layer of paper or plastic film 64 is herein defined as a separator and causes the elastomer layers 60 and 61 to be non-adhered. A circular C-shaped clamp 65 is used to provide a reinforcement for the peripheral edge of the jack. Such clamp 65 has two circular half-sections 66 and 67 with a plurality of circumferentially spaced aligned bores therein that receive bolts 68 to assist in the reinforcement. Such clamp also assists in the wedging action of the pneumatic jack in its use under a vehicle as illustrated in Fig. 6. With such one-piece structure, the inflatable jack eliminates some possible leakage problems in the two-piece sheet constructed inflatable jacks, Fig. 1. In addition to the use of paper or plastic film to effect and maintain a separate cure of the respective layers 60 and 61, silver paint may be used.

Another modification very similar to the invention shown and described as to Figs. 9 through 11 is that shown in Figs. 12 and 13 wherein two elastomeric sheeting materials 70 and 71 are cut into round configurations separated by a suitable layer of paper or a plastic film 74. Such layer of paper 74 is placed between layers 70 and 71 except that such paper terminates adjacent to the peripheral edges of the layer to permit the merging of the two layers at such edges during vulcanization leaving a non-adhered void where the layer of paper was disposed. The two layers of sheeting 70 and 71 along with the layer of paper 74 are then placed in a mold for vulcanization. After vulcanization the two layers of elastomeric sheeting material form a unitary inflatable jack having a flared or bulged edge 75 adjacent to the outer periphery with a planar circumferential portion 76 along the entire periphery thereof. A circular clamp 77 is used to provide a rigid reinforcing edge for the pneumatic jack. Such clamp 77 is composed of two circular half sections 78 and 79, both being off-set along its mid portion to accommodate the flared or bulged edge 75. Each half section 78 and 79 has a plurality of circumferentially spaced aligned bores therein that receive bolts 72. The curved section of each half section 78 and 79 defines an outboard portion (78a and 79a) that lies along the peripheral edge and an inboard portion (78b and 79b) that lies inwardly towards the inflatable portion of the jack. Inboard portions 78b and 79b are the portions that receives the bolts 72 and are protected from damage from external sources because of being inwardly of the bulge 75.

A further modification is shown in Figures 14 and 15 wherein two elastomeric layers of sheeting

material 80 and 81 are cut into round configuration and placed over each other but separated for the most part by a thin layer of paper or a plastic film 82 which is laid between them. As seen in Fig. 14, the annular layer of paper or plastic film approaches the peripheral edges but sufficient room is left such that on placing such layers in a mold for shaping and vulcaniation a flared or bulge 83 is formed along the entire periphery of the jack with two layers 80 and 81 forming a planar circular portion 85 adjacent such bulge with the two layers 80 and 81 forming two-spaced planar portions 86 and 87 created by the separator or the paper layer during vulcanization. The planar portion 85 receives a pair of vertically spaced circular rims 88 and 89 which rim portions have a plurality of circumferentially spaced aligned apertures which receive bolts 90 to firmly clamp the planar portion 85 and provide rigidity to the pneumatic jack that facilitates the wedging action when inflated and used to jack up a vehicle for the changing of a tire. In all of the examples described above, a suitable valve means such as that described in Figures 1 or 5 is provided to assure means to inflate and deflate such jack.

## Claims

1. A pneumatic jack (10) comprising flat sheets (12, 14; 60, 61; 70, 71; 80, 81) of a flexible material, which are fluid-tightly sealed together around their peripheral edges and valve means (32; 54) in communication with the interior of said sheets, characterized in that said two sheets (12, 14; 60, 61; 70, 71; 80, 81) consist of non-reinforced elastomer material and are encompassed around their peripheral edges by rigid framing means (16, 18; 44, 46; 66, 67; 78, 79; 88, 89).

2. The jack as set forth in Claim 1 wherein said sheets (12, 14; 60, 61; 70, 71; 80, 81) are constructed of a material selected from the class of elastomers including nitrile compounds, natural rubbers, and synthetic rubbers having a straight line stress-strain curve.

3. The jack as set forth in Claim 1 or 2 wherein said framing members (16, 18; 44, 46; 66, 67; 78, 79; 88, 89) are positioned on opposite sides of said sheets (12, 14; 60, 61; 70, 71; 80, 81) and are coupled together with said sheets through structures (22; 50; 68; 72; 90) extending through said framing members and said sheets.

4. The jack as set forth in one of Claims 1 to 3 wherein said framing members (16, 18; 44, 46; 66, 67; 78, 79; 88, 89) are constructed of a material selected from the class of rigid materials including aluminum, steel and plastic.

5. The jack as set forth in one of Claims 1 to 4 wherein said sheets (12, 14) and framing members (16, 18) are generally flat and rectangular in configuration with the interior surface of said framing members being of an arcuate shape (38) at their inner corners to minimize high stress buildup in the sheets adjacent these areas.

6. The jack as set forth in one of Claims 1 to 4, wherein said sheets (60, 61; 70, 71; 80, 81) and framing members (44, 46; 66, 67; 78, 79; 88, 89) are generally flat and circular in configuration.

7. A pneumatic jack according to claims 1 to 4 comprising a pair of

flat rectangular sheets (12, 14) of an elastomeric material with peripheral side edges;

rigid, rectangular framing means (16, 18) encompassing said peripheral edges of said sheets;

an adhesive joining said sheets (12, 14) around their periphery between said framing means (16, 18); and

valve means (32) in pneumatic communication with the interior of said sheets.

8. A method of making a pneumatic jack (10) comprising the steps of encompassing a thin separator (64, 74, 82) except for its marginal edges by elastomeric material to form a flat sheet, vulcanizing said flat sheet into a flat sheet with a flared peripheral edge (62, 75; 83) while disintegrating said separator (64) to form a chamber coextensive with the position held by said separator, providing a valve means (32; 54) in said pneumatic jack (10) that communicates with said chamber formed by said separator (64) for pressurizing said chamber, and attaching a rim clamp (65; 77, 88, 89) to the periphery of said pneumatic jack (10) to provide a reinforcing edge to said jack.

9. A method of making a pneumatic jack as set forth in Claim 8 wherein said rim clamp (65; 77) is located adjacent to said flared peripheral edge (62; 75) and radially inwardly thereof on said flared peripheral edge.

10. A method of making a pneumatic jack as set forth in Claim 8 or 9 wherein said vulcanizing of said flat sheet forms said sheet into a circular form and molds a flat solid annular planar surface (76) radially outwardly of said flared peripheral edge (75) of said pneumatic jack (10).

11. A method of making a pneumatic jack as set forth in Claim 10 wherein said rim clamp (77) is located on said radially outwardly disposed flat annular surface (76).

12. A method of making a pneumatic jack as set forth in one of Claims 8 to 10 wherein said rim clamp (77) is located radially inwardly of said flared peripheral edge (62; 75) of said jack (10).

13. A method of making a pneumatic jack (10) as set forth in Claim 8 comprising the steps of forming a peripheral bead (63) embedded in a peripherally extending elastomeric bead (62), laying said bead on a first sheet (61) of an elastomer, locating a separator layer (64) on said sheet of said elastomer and having the peripheral edge of said separator spaced inwardly from said bead (62), placing a second sheet (60) of an elastomer onto said first sheet (61) of elastomer and to overlie said bead to form a composite with said bead (62) forming a bulge and a peripheral edge, connecting a valve (32, 54) to said sheets (60, 61) of elastomer to communicate with said separator (64), vulcanizing said composite with said separator (64) preventing adherence of adjacent portions of said sheets (60, 61) of elastomers to each other, and placing a clamp (65) onto said peripheral edge of said bead of said vulcanized composite to firmly engage said peripherally extending elastomeric covered beads.

**Patentansprüche**

1. Pneumatischer Heber (10) mit flachen Bahnen (12, 14; 60, 61; 70, 71; 80, 81) aus flexiblem Material, die an ihren Umfangsrändern flüssigkeitsdicht miteinander versiegelt sind und in Verbindung mit dem Inneren der Bahnen stehenden Ventilvorrichtungen (32; 54), dadurch gekennzeichnet, daß die beiden Bahnen (12, 14; 60, 61; 70, 71; 80, 81) aus unverstärktem Elastomermaterial bestehen und um ihre Umfangsränder herum von starren Rahmenteilen (16, 18; 44, 46; 66, 67; 78, 79; 88, 89) umgeben sind.

2. Heber nach Anspruch 1, bei dem die Bahnen (12, 14; 60, 61; 70, 71; 80, 81) aus einem Material gebildet sind, das aus der Klass der Elastomere ausgewählt ist, zu der Nitrilzusammensetzungen, Naturgummi und synthetischen Gummi mit einer geradlinigen Spannungs-Dehnungskurve gehören.

3. Heber nach Anspruch 1 oder 2, bei dem die Rahmenteile (16, 18; 44, 46; 66, 67; 78, 79; 88, 89) an gegenüberliegenden Seiten der Bahnen (12, 14; 60, 61; 70, 71; 80, 81) positioniert und mit den Bahnen durch Strukturen (22; 50; 68; 72; 90) verbunden sind, die sich durch die Rahmenteile und die Bahnen erstrecken.

4. Heber nach einem der Ansprüche 1 bis 3, bei dem die Rahmenteile (16, 18; 44, 46; 66, 67; 78, 79; 88, 89) aus einem Material gebildet sind, das aus der Gruppe der starren Materialien ausgewählt ist, zu der Aluminium, Stahl und Plastik gehören.

5. Heber nach einem der Ansprüche 1 bis 4, bei dem die Bahnen (12, 14) und die Rahmenteile (16, 18) von im wesentlichen flacher und rechteckiger Form sind, wobei die Innenfläche der Rahmenteile an ihren inneren Ecken bogenförmige Gestalt (38) aufweist, um das Entstehen hoher Spannungen in den Bahnen in der Näher dieser Bereiche zu minimieren.

6. Heber nach einem der Ansprüche 1 bis 4, bei dem die Bahnen (60, 61; 70, 71; 80, 81) und die Rahmenteile (44, 46; 66, 67; 78, 79; 88, 89) im wesentlichen flach und kreisförmig ausgebildet sind.

7. Pneumatischer Heber nach den Ansprüchen 1 bis 4 mit zwei flachen, rechteckigen Bahnen (12, 14) aus einem elastomeren Material mit Umfangsseitenrändern;

starren, rechteckigen Rahmenteilen (16, 18), welche die Umfangsränder der Bahnen umgeben;

einem die Bahnen (12, 14) an ihrem Umfang zwischen den Rahmenteilen (16, 18) verbindenden Kleber; und

einer mit dem Inneren der Bahnen in pneumatischer Kommunikation stehenden Ventilvorrichtung (32).

8. Verfahren zur Herstellung eines pneumatischen Hebers (10) mit den folgenden Schritten:

— Umgeben eines dünnen Separators (64, 74, 82) mit elastomerem Material zur Bildung einer flachen Bahn, mit Ausnahme der äußeren Ränder des Separators,

— Vulkanisieren der flachen Bahn zu einer flachen Bahn mit einem verdickten Umfangsrand (62; 75; 83), während der Separator (64) zur Bildung einer kammer aufgelöst wird, die in ihren Abmessungen mit der vom Separator eingenommenen Position übereinstimmt,

— Vorsehen einer Ventilvorrichtung (32; 54) in dem pneumatischen Heber (10), die mit der durch den Separator (64) gebildeten Kammer verbunden ist, um die Kammer druckzubeaufschlagen,

— und Anbringen einer Randklammer (65; 77; 88, 89) am Umfang des pneumatischen Hebers (10), zum Schaffen eines Verstärkungsrands für den Heber.

9. Verfahren zur Herstellung eines pneumatischen Hebers nach Anspruch 8, bei dem die Randklammer (65; 77) an den verdickten Umfangsrand (62, 75) angrenzend und radial nach innen zu diesem auf dem verdickten Umfangsrand angeordnet wird.

10. Verfahren zur Herstellung eines pneumatischen Hebers nach Anspruch 8 oder 9, bei dem durch das Vulkanisieren die flachen Bahnformen kreisrund geformt werden und eine flache massive ringförmige ebene Fläche (76) radial nach außen zu dem verdickten Umfangsrand (75) des pneumatischen Hebers (10) geformt wird.

11. Verfahren zur Herstellung eines pneumatischen Hebers nach Anspruch 10, bei dem die Randklammer (77) auf der radial außen liegenden ringförmigen Fläche (76) angeordnet wird.

12. Verfahren zur Herstellung eines pneumatischen Hebers nach einem der Ansprüche 8 bis 10, bei dem die Randklammer (77) radial einwärts zu dem verdickten Umfangsrand (62; 75) des Hebers (10) angeordnet wird.

13. Verfahren zur Herstellung eines pneumatischen Hebers (10) nach Anspruch 8, mit den folgenden Schritten:

— Formen einer Umfangsrippe (63), die in einer sich umfangsmäßig erstreckenden elastomeren Rippe (62) eingebettet ist,

— Legen der Rippe auf eine erste Bahn (61) eines Elastomers,

— Anordnen einer Separatorschicht (64) auf der Elastomerbahn, und Beabstanden des Umfangsrandes des Separators einwärts von der Rippe (62),

— Plazieren einer zweiten Elastomerbahn (60) auf die erste Elastomerbahn (61) und Überdecken der Rippe zur Bildung eines Verbunds mit der Rippe (62), der einen Wulst und einen Umfangsrand bildet,

— Verbinden eines Ventils (32, 54) mit den Elastomerbahnen (60, 61) zur Kommunikation mit dem Separator (64),

— Vulkanisieren des Verbunds mit dem Separator (64), wodurch das Aneinanderkleben benchbarter Bereiche der Elastomerbahnen (60, 61) verhindert wird,

— und Anbringen einer Klammer (65) am Umfangsrand der Rippe des vulkanisierten Verbunds zur festen Verbindung der sich umfangsmäßig erstreckenden elastomeren bedeckten Rippen.

## Revendications

1. Cric pneumatique (10) comprenant des feuilles planes (12, 14; 60, 61; 70, 71; 80, 81) en un matériau souple, scellées mutuellement de façon étanche aux fluides autour de leurs bords périphériques et des moyens en forme de valve (32; 54) en communication avec l'intérieur desdites feuilles, caractérisé en ce que lesdites deux feuilles (12, 14; 60, 61; 70, 71; 80, 81) sont constituées par un matériau élastomère non armé et sont entourées autour de leurs bords périphériques par des moyens en forme de cadre rigide (16, 18; 44, 46; 66, 67; 78, 79; 88, 89).

2. Cric selon la revendication 1, dans lequel lesdites feuilles (12, 14; 60, 61; 70, 71; 80, 81) sont réalisées à partir d'un matériau sélectionné dans une classe d'élastomères comprenant des composés de nitrile, des caoutchoucs naturels et des caoutchoucs synthétiques ayant une courbe contrainte-déformation rectiligne.

3. Cric selon la revendication 1 ou 2, dans lequel lesdits éléments en forme de cadre (16, 18; 44, 46; 66, 67; 78, 79; 88, 89) sont positionnés sur les bords opposés desdites feuilles (12, 14; 60, 61; 70, 71; 80, 81) et accouplés mutuellement avec lesdites feuilles par des structures (22; 50; 68; 72; 90) s'étendant au travers desdits organes en forme de cadre et desdites feuilles.

4. Cric selon l'une quelconque des revendications 1 à 3, dans lequel lesdits éléments en forme de cadre (16, 18; 44, 46; 66, 67; 78, 79; 88, 89) sont constitués par un matériau sélectionné dans la classe des matériaux rigides comprenant l'aluminium, l'acier et les matières plastiques.

5. Cric selon l'une quelconque des revendications 1 à 4, dans lequel lesdites feuilles (12, 14) et les éléments en forme de cadre (16, 18) ont une configuration générale plane et rectangulaire, la surface intérieure desdits éléments en forme de cadre étant de forme incurvée (38) à leurs angles intérieurs pour minimiser une formation élevée des contraintes dans les feuilles, à proximité de ces zones.

6. Cric selon l'une quelconque des revendications 1 à 4, dans lequel lesdites feuilles (60, 61; 70, 71; 80, 81) et les éléments en forme de cadre (44, 46; 66, 67; 78, 79; 88, 89) sont généralement plats et de configuration circulaire.

7. Cric pneumatique selon l'une quelconque des revendications 1 à 4, comprenant:

deux feuilles rectangulaires planes (12, 14) en un matériau élastomère à bords latéraux périphériques;

des moyens en forme de cadre rectangulaire rigide (16, 18) entourant lesdits bords périphériques desdites feuilles;

un adhésif reliant lesdites feuilles (12, 14) autour de leur périphérie entre lesdits moyens en forme de cadre (16, 18); et

des moyens en forme de valve (32) en communication pneumatique avec l'intérieur desdites feuilles.

8. Procédé de fabrication d'un cric pneumatique (10) comprenant les étapes d'entourage d'un séparateur mince (64, 74, 82), à l'exception de ses bords marginaux, par un matériau élastomère pour former une feuille plane, de la vulcanisation de ladite feuille plane en une feuille plane à bord périphérique évasé (62; 75; 83) pendant la désintégration dudit séparateur (64) pour former une chambre de même étendue avec la position retenue par ledit séparateur, l'agencement de moyens en forme de valve (32; 54) dans ledit cric pneumatique (10) communiquant avec ladite chambre formée par ledit séparateur (64) pour mettre sous pression ladite chambre et la fixation d'une bride de serrage périphérique (65; 77, 88, 89) à la périphérie dudit cric pneumatique (10) pour constituer un bord de renfort dudit cric.

9. Procédé de fabrication d'un cric pneumatique selon la revendication 8, dans lequel ladite bride de serrage périphérique (65; 77) est située à proximité dudit bord périphérique évasé (62; 75) et radialement vers l'intérieur de celui-ci sur ledit bord périphérique évasé.

10. Procédé de fabrication d'un cric pneumatique selon les revendications 8 ou 9, dans lequel ladite vulcanisation de ladite feuille plane conforme à ladite feuille selon une forme circulaire et moule une surface planaire annulaire massive plane (76) faisant saillie radialement vers l'extérieur dudit bord périphérique évasé (75) dudit cric pneumatique (10).

11. Procédé de fabrication d'un cric pneumatique selon la revendication 10, dans lequel la bride de serrage périphérique (77) est située sur ladite surface annulaire plane disposée radialement vers l'extérieur (76).

12. Procédé de fabrication d'un cric pneumatique selon l'une quelconque des revendications 8 à 10, dans lequel ladite bride de serrage périphérique (77) est disposée radialement vers l'intérieur dudit bord périphérique évasé (62; 75) dudit cric (10).

13. Procédé de fabrication d'un cric pneumatique (10) selon la revendication 8, comprenant les étapes de réalisation d'un bourrelet périphérique (63) noyé dans un bourrelet d'élastomère s'étendant périphériquement (62), la pose dudit bourrelet sur une première feuille (61) d'élastomère, le positionnement d'une couche de séparateur (64) sur ladite feuille dudit élastomère et la disposition du bord périphérique dudit séparateur espacée vers l'intérieur à partir dudit bourrelet (62), la mise en place d'une seconde feuille (60) d'un élastomère sur ladite première feuille (61) d'élastomère et pour recouvrir ledit bourrelet de façon à former un ensemble composite avec ledit bourrelet (62) pour former un renflement et un bord périphérique, le raccordement d'une valve (32, 54) auxdites feuilles (60, 61) d'élastomère pour communiquer avec ledit séparateur (64), la vulcanisation dudit ensemble composite avec ledit séparateur (64) en empêchant l'adhérence des parties adjacentes desdites feuilles (60, 61) d'élastomère entre elles et la mise en place d'une bride de serrage (65) sur ledit bord périphérique dudit bourrelet dudit ensemble composite vulcanisé pour assurer un engagement ferme desdits bourrelets recouverts d'élastomère, s'étendant périphériquement.

EP 0 197 381 B1

FIG. 1

FIG. 2

FIG. 3

FIG. 4

FIG. 5

1

FIG. 6

FIG. 7

FIG. 8

FIG. 9

FIG. 10

FIG. 11

EP  0 197 381  B1

FIG. 12

FIG. 13

FIG. 14

FIG. 15

4